# EUROPEAN PATENT APPLICATION

(11) **EP 4 804 482 A1**
(43) Date of publication of application: **09.09.2026**
(21) Application number: 23957312.4
(22) Date of filing: 03.11.2023
(51) Int. Cl.: H04L 47/32

(54) **COMMUNICATION METHOD, TERMINAL AND STORAGE MEDIUM**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN)
(74) Representative: Dehns Germany Partnerschaft mbB
(86) International application number: PCT/CN2023/129508
(87) International publication number: WO 2025/091445

(57) **Abstract**

Provided in the embodiments of the present disclosure are a communication method, a terminal and a storage medium. The method is executed by the terminal, and the method comprises: determining that a first timer is in an operating state and receives first information sent by a network device, and performing an operation. The first timer is used for controlling packet data convergence protocol (PDCP) service data units (SDU) to be discarded; the operation comprises a first operation and/or a second operation, the first operation controlling the first timer to continue to operate or controlling the first timer to stop operating, and the second operation controlling the terminal to discard a PDCP SDU associated with the first timer. The present disclosure specifies mechanisms for controlling operation of timers and discarding PDCP SDUs.

## Description

### TECHNICAL FIELD

The present disclosure relates to the field of communication technologies, and in particular, to a communication method, a terminal, and a storage medium.

### BACKGROUND

In the field of communication technologies, in some scenarios (for example, congestion scenarios), discarding of a Packet Data Convergence Protocol (PDCP, Packet Data Convergence Protocol) service data unit (SDU, Service Data Unit) may be implemented based on timing of a timer.

### SUMMARY

How to control timer running and discard a PDCP SDU is a problem that needs to be considered.

Embodiments of the present disclosure provide a communication method, where the method is performed by a terminal, and the method includes:
determining that a first timer is in a running state and first information sent by a network device is received, and performing an operation;
where the first timer is used to control discarding of a Packet Data Convergence Protocol (PDCP) service data unit (SDU); the operation includes a first operation and/or a second operation; the first operation controls the first timer to continue running or controls the first timer to stop running; and the second operation controls the terminal to discard a PDCP SDU associated with the first timer.

According to a second aspect of the embodiments of the present disclosure, a terminal is provided, where the terminal includes:
a processing module, configured to:
determine that a first timer is in a running state and first information sent by a network device is received, and perform an operation;
where the first timer is used to control discarding of a Packet Data Convergence Protocol (PDCP) service data unit (SDU); the operation includes a first operation and/or a second operation; the first operation controls the first timer to continue running or controls the first timer to stop running; and the second operation controls the terminal to discard a PDCP SDU associated with the first timer.

According to a third aspect of the embodiments of the present disclosure, a terminal is provided, where the terminal includes:
one or more processors;
where the terminal is used to perform the method according to the first aspect.

According to a fourth aspect of the embodiments of the present disclosure, a storage medium is provided, where the storage medium stores instructions, and when the instructions are run on a communication device, the communication device is caused to perform the method provided in the first aspect.

The technical solutions provided by the embodiments of the present disclosure clarify a mechanism for controlling timer running and discarding a PDCP SDU.

It should be understood that the foregoing general description and the following detailed description are merely exemplary and explanatory, and cannot limit the embodiments of the present disclosure.

### BRIEF DESCRIPTION OF THE DRAWINGS

The accompanying drawings herein are incorporated into the specification and constitute a part of the specification, show embodiments consistent with the present disclosure, and together with the specification are used to explain the principles of the embodiments of the present disclosure.
FIG. 1a is a schematic architectural diagram of a communication system according to an exemplary embodiment;
FIG. 2a is a schematic flowchart of a communication method according to an exemplary embodiment;
FIG. 3a is a schematic flowchart of a communication method according to an exemplary embodiment;
FIG. 3b is a schematic flowchart of a communication method according to an exemplary embodiment;
FIG. 4a is a schematic flowchart of a communication method according to an exemplary embodiment;
FIG. 5a is a schematic diagram of a communication system according to an exemplary embodiment;
FIG. 6a is a schematic structural diagram of a terminal according to an exemplary embodiment;
FIG. 6b is a schematic structural diagram of a network device according to an exemplary embodiment;
FIG. 7a is a schematic structural diagram of a UE according to an exemplary embodiment; and
FIG. 7b is a schematic structural diagram of a communication device according to an exemplary embodiment.

### DETAILED DESCRIPTION

Embodiments of the present disclosure provide a communication method, a terminal, and a storage medium.

In a first aspect, embodiments of the present disclosure provide a communication method, the method being performed by a terminal, and the method includes:
determining that a first timer is in a running state and that first information sent by a network device is received, and performing an operation;
wherein the first timer is used to control discarding of a Packet Data Convergence Protocol (PDCP) service data unit (SDU); the operation includes a first operation and/or a second operation; the first operation controls the first timer to continue running or controls the first timer to stop running; and the second operation controls the terminal to discard a PDCP SDU associated with the first timer.

In the above embodiment, when the first timer is in a running state and when the first information sent by the network device is received, an operation of controlling the first timer to continue running, controlling the first timer to stop running, and/or controlling the terminal to discard the PDCP SDU associated with the first timer may be performed. In this way, a mechanism for controlling the first timer and a mechanism for discarding the PDCP SDU associated with the first timer in a case where the first timer is in the running state are clarified, and the reliability of discarding the PDCP SDU is improved.

In conjunction with some embodiments of the first aspect, in some embodiments, the first information is at least one of the following:
congestion indication information;
deconfiguration information of a packet dropping mechanism based on Packet Set Importance (PSI); and
PDCP reconfiguration information.

In the above embodiment, the first information may be congestion indication information, deconfiguration information of a packet dropping mechanism based on Packet Set Importance (PSI), and/or PDCP reconfiguration information, so that the discarding operation of the PDCP SDU may be flexibly triggered.

In conjunction with some embodiments of the first aspect, in some embodiments, the congestion indication information is a Packet Set Importance (PSI) discard deactivation instruction.

In the above embodiment, it is clarified that the congestion indication information is a Packet Set Importance (PSI) discard deactivation instruction.

In conjunction with some embodiments of the first aspect, in some embodiments, the performing an operation includes at least one of the following:
controlling the first timer to continue running; and
discarding the PDCP SDU after the first timer expires.

In the above embodiment, when the first timer is in a running state and the first information is received, the first timer may be controlled to continue running and/or the PDCP SDU may be discarded after the first timer expires, so that the mechanism for controlling the first timer and the mechanism for discarding the PDCP SDU are clarified.

In conjunction with some embodiments of the first aspect, in some embodiments, the performing an operation includes at least one of the following:
controlling the first timer to stop running; and
discarding the PDCP SDU immediately.

In the above embodiment, when the first timer is in a running state and the first information is received, the first timer may be controlled to stop running and/or the PDCP SDU may be discarded immediately, so that the mechanism for controlling the first timer and the mechanism for discarding the PDCP SDU are clarified.

In conjunction with some embodiments of the first aspect, in some embodiments, the performing an operation includes one of the following:
controlling the first timer to stop running and controlling a second timer to run, and discarding the PDCP SDU after the second timer expires; and
controlling the first timer to stop running and, after the first timer stops running, controlling the first timer to restart running, and discarding the PDCP SDU after the first timer expires.

In the above embodiment, when the first timer is in a running state and the first information is received, the first timer may be controlled to stop running, the second timer may be controlled to run, and the PDCP SDU may be discarded after the second timer expires; or, the first timer may be controlled to stop running, after the first timer stops running the first timer may be controlled to restart running, and the PDCP SDU may be discarded after the first timer expires. Different discarding mechanisms are clarified.

In conjunction with some embodiments of the first aspect, in some embodiments, a timer duration of the second timer is network-configured.

In the above embodiment, the network may configure the timer duration of the second timer.

In conjunction with some embodiments of the first aspect, in some embodiments, an importance level of the PDCP SDU associated with the first timer is lower than that of the PDCP SDU associated with the second timer; and/or, a timer duration of the first timer is shorter than a timer duration of the second timer.

In the above embodiment, the relationship between the first timer and the second timer is clarified.

In conjunction with some embodiments of the first aspect, in some embodiments, the determining that a first timer for controlling discarding of a Packet Data Convergence Protocol (PDCP) service data unit (SDU) is in a running state and that first information sent by a network device is received, and performing a first operation and/or a second operation includes:
determining, based on communication rule information or second information sent by the network device that is received, that a first timer for controlling discarding of a PDCP SDU is in a running state and that first information sent by the network device is received, and performing the first operation and/or the second operation.

In the above embodiment, based on communication rule information or second information sent by the network device that is received, it may be determined that the first timer for controlling discarding of the PDCP SDU is in a running state and that the first information sent by the network device is received, and the first operation and/or the second operation may be performed. In this way, the manner of performing the discarding operation becomes more flexible.

In a second aspect, embodiments of the present disclosure provide a terminal, and the terminal includes:
a processing module, configured to:
determine that a first timer is in a running state and that first information sent by a network device is received, and perform an operation;
wherein the first timer is used to control discarding of a Packet Data Convergence Protocol (PDCP) service data unit (SDU); the operation includes a first operation and/or a second operation; the first operation controls the first timer to continue running or controls the first timer to stop running; and the second operation controls the terminal to discard a PDCP SDU associated with the first timer.

In conjunction with some embodiments of the second aspect, in some embodiments, the processing module is further configured such that the first information is at least one of the following:
congestion indication information;
deconfiguration information of a packet dropping mechanism based on Packet Set Importance (PSI); and
PDCP reconfiguration information.

In conjunction with some embodiments of the second aspect, in some embodiments, the processing module is further configured such that the congestion indication information is a Packet Set Importance (PSI) discard deactivation instruction.

In conjunction with some embodiments of the second aspect, in some embodiments, the processing module is further configured to include at least one of the following:
control the first timer to continue running; and
discard the PDCP SDU after the first timer expires.

In conjunction with some embodiments of the second aspect, in some embodiments, the processing module is further configured to include at least one of the following:
control the first timer to stop running; and
discard the PDCP SDU immediately.

In conjunction with some embodiments of the second aspect, in some embodiments, the processing module is further configured to include one of the following:
control the first timer to stop running and control the second timer to run, and discard the PDCP SDU after the second timer expires; and
control the first timer to stop running and, after the first timer stops running, control the first timer to restart running, and discard the PDCP SDU after the first timer expires.

In conjunction with some embodiments of the second aspect, in some embodiments, the processing module is further configured such that a timer duration of the second timer is network-configured.

In conjunction with some embodiments of the second aspect, in some embodiments, the processing module is further configured such that an importance level of the PDCP SDU associated with the first timer is lower than that of the PDCP SDU associated with the second timer; and/or, a timer duration of the first timer is shorter than a timer duration of the second timer.

In conjunction with some embodiments of the second aspect, in some embodiments, the processing module is further configured to:

determine, based on communication rule information or second information sent by the network device that is received, that a first timer for controlling discarding of a PDCP SDU is in a running state and that first information sent by the network device is received, and perform the first operation and/or the second operation.

In a third aspect, embodiments of the present disclosure provide a terminal, the terminal including:
one or more processors;
wherein the terminal is used to perform the method provided in the first aspect.

In a fourth aspect, embodiments of the present disclosure provide a storage medium, wherein the storage medium stores instructions, and when the instructions are run on a communication device, the communication device is caused to perform the method described in the optional implementations of the first aspect.

In a fifth aspect, embodiments of the present disclosure provide a program product, and when the above program product is executed by a communication device, the above communication device is caused to perform the method described in the optional implementations of the first aspect.

In a sixth aspect, embodiments of the present disclosure provide a computer program, and when the computer program runs on a computer, the computer is caused to perform the method described in the optional implementations of the first aspect.

In a seventh aspect, embodiments of the present disclosure provide a chip or a chip system. The chip or chip system includes a processing circuit configured to perform the method described in the optional implementations according to the above first aspect, second aspect, and third aspect.

It may be understood that the above terminal, storage medium, program product, computer program, chip, or chip system are all used to perform the method proposed in embodiments of the present disclosure. Therefore, for the beneficial effects that can be achieved thereby, reference may be made to the beneficial effects in the corresponding method, and details are not described herein again.

Embodiments of the present disclosure provide a communication method, a terminal, and a storage medium. In some embodiments, the communication method may be used interchangeably with terms such as an information indication method, an information processing method, and an information transmission method, and the communication system may be used interchangeably with terms such as an information processing system.

The embodiments of the present disclosure are not exhaustive, and are merely illustrations of some embodiments, and do not constitute specific limitations on the protection scope of the present disclosure. In the absence of contradiction, each step in one embodiment may be implemented as an independent embodiment, and the steps may be combined in any manner. For example, in one embodiment, a solution after removing some steps may also be implemented as an independent embodiment, and the order of the steps in one embodiment may be interchanged in any manner. In addition, optional implementations in one embodiment may be combined in any manner. Further, the embodiments may be combined in any manner. For example, some or all steps of different embodiments may be combined in any manner, and one embodiment may be combined with optional implementations of other embodiments in any manner.

In the embodiments of the present disclosure, if there is no special description and no logical conflict, the terms and/or descriptions among the embodiments are consistent, and may be referred to each other, and the technical features in different embodiments may be combined to form new embodiments according to their inherent logical relationships.

The terms used in the embodiments of the present disclosure are merely for the purpose of describing specific embodiments, and are not intended as limitations on the present disclosure.

In the embodiments of the present disclosure, unless otherwise specified, an element expressed in a singular form, such as "a", "an", "the", "the above", "the foregoing", "this", and the like, may mean "one and only one", and may also mean "one or more", "at least one", and the like. For example, in a case where articles such as "a," "an," and "the" in English are used in translation, the noun following the article may be understood as being in a singular expression form, or may be understood as being in a plural expression form.

In the embodiments of the present disclosure, "a plurality of" means two or more.

In some embodiments, terms such as "at least one of (at least one item, at least one)," "one or more," "a plurality of," and "multiple" may be used interchangeably.

In some embodiments, expression forms such as "at least one of A and B," "A and/or B," "A in one case and B in another case," and "in response to one case, A, and in response to another case, B" may include the following technical solutions according to the circumstances: in some embodiments, A (A is performed regardless of B); in some embodiments, B (B is performed regardless of A); in some embodiments, selection from A and B for execution (A and B are selectively performed); and in some embodiments, A and B (both A and B are performed). The same applies when there are more branches such as A, B, and C.

In some embodiments, expression forms such as "A or B" may include the following technical solutions according to the circumstances: in some embodiments, A (A is performed regardless of B); in some embodiments, B (B is performed regardless of A); and in some embodiments, selection from A and B for execution (A and B are selectively performed). The same applies when there are more branches such as A, B, and C.

In the embodiments of the present disclosure, prefix words such as "first" and "second" are merely used to distinguish different described objects, and do not constitute limitations on the position, order, priority, quantity, content, or the like of the described objects. For statements regarding the described objects, reference should be made to the claims or the contextual description in the embodiments, and the use of prefix words should not constitute redundant limitations. For example, if the described object is a "field," the ordinal words before "field" in "a first field" and "a second field" do not limit the position or order between the fields, and "first" and "second" do not limit whether the "fields" modified thereby are in the same message, nor do they limit the order of the "first field" and the "second field." As another example, if the described object is a "level," the ordinal words before "level" in "a first level" and "a second level" do not limit the priority between the levels. As another example, the number of described objects is not limited by the ordinal word, and may be one or more. Taking a "first device" as an example, the number of "devices" may be one or more. In addition, objects modified by different prefix words may be the same or different. For example, if the described object is a "device," the "first device" and the "second device" may be the same device or different devices, and their types may be the same or different. As another example, if the described object is "information," the "first information" and the "second information" may be the same information or different information, and their content may be the same or different.

In some embodiments, "including A," "containing A," "used to indicate A," and "carrying A" may be interpreted as directly carrying A, and may also be interpreted as indirectly indicating A.

In some embodiments, terms such as "in response to ...," "in response to determining ...," "in a case where ...," "when ...," "if ...," and "provided that ..." may be used interchangeably.

In some embodiments, terms such as "greater than," "greater than or equal to," "not less than," "more than," "more than or equal to," "no less than," "higher than," "higher than or equal to," "not lower than," and "above" may be used interchangeably, and terms such as "less than," "less than or equal to," "not greater than," "fewer than," "fewer than or equal to," "no more than," "lower than," "lower than or equal to," "not higher than," and "below" may be used interchangeably.

In some embodiments, an apparatus and a device may be interpreted as physical or may be interpreted as virtual, and the names thereof are not limited to the names recited in the embodiments. In some cases, they may also be understood as "equipment," "device," "circuit," "network element," "node," "function," "unit," "component (section)," "system," "network," "chip," "chip system," "entity," "body," and the like.

In some embodiments, a "network" may be interpreted as an apparatus included in the network, for example, an access network device, a core network device, and the like.

In some embodiments, an "access network device (AN device)" may also be referred to as a "radio access network device (RAN device)," a "base station (BS)," a "radio base station," or a "fixed station," and in some embodiments may also be understood as a "node," an "access point," a "transmission point (TP)," a "reception point (RP)," a "transmission and/or reception point (transmission/reception point, TRP)," a "panel," an "antenna panel," an "antenna array," a "cell," a "macro cell," a "small cell," a "femto cell," a "pico cell," a "sector," a "cell group," a "serving cell," a "carrier," a "component carrier," a "bandwidth part (BWP)," and the like.

In some embodiments, a "terminal" or a "terminal device" may be referred to as a "user equipment (UE)," a "user terminal," a "mobile station (MS)," a "mobile terminal (MT)," a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and the like.

In some embodiments, obtaining data, information, and the like may comply with the laws and regulations of the country or region where it is located.

In some embodiments, data, information, and the like may be obtained after user consent is obtained.

In addition, each element, each row, or each column in the tables of the embodiments of the present disclosure may be implemented as an independent embodiment, and any combination of any elements, any rows, and any columns may also be implemented as an independent embodiment.

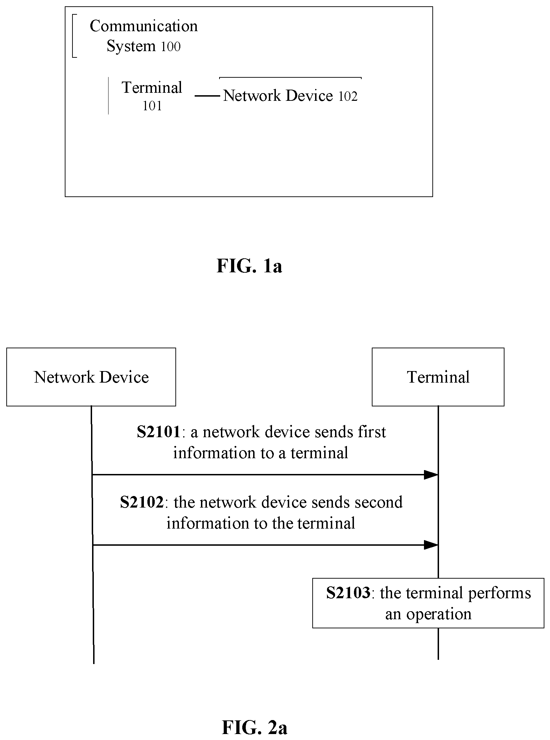

FIG. 1a is a schematic architectural diagram of a communication system illustrated according to embodiments of the present disclosure.

As shown in FIG. 1a, the communication system 100 includes a terminal 101 and a network device 102.

In some embodiments, the network device 102 may include at least one of an access network device and a core network device.

In some embodiments, the terminal 101 for example includes at least one of a mobile phone, a wearable device, an Internet of Things device, a vehicle having a communication function, an intelligent vehicle, a tablet computer (Pad), a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, but is not limited thereto.

In some embodiments, the access network device may for example be a node or device that accesses the terminal to a wireless network, and the access network device may include at least one of an evolved NodeB (eNB) in a 5G communication system, a next generation eNB (ng-eNB), a next generation NodeB (gNB), a Node B (NB), a home Node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an Open RAN, a Cloud RAN, a base station in another communication system, and an access node in a Wi-Fi system, but is not limited thereto.

In some embodiments, the technical solution of the present disclosure may be applicable to an Open RAN architecture. At this time, an interface between access network devices or an interface within an access network device involved in the embodiments of the present disclosure may be changed to an internal interface of Open RAN, and processes and information interaction among these internal interfaces may be implemented through software or a program.

In some embodiments, the access network device may be composed of a central unit (CU) and a distributed unit (DU), wherein the CU may also be referred to as a control unit, and using a CU-DU structure can split protocol layers of the access network device, functions of some protocol layers being placed in the CU for centralized control, and functions of the remaining part or all of the protocol layers being distributed in the DU, with the DU being centrally controlled by the CU, but not limited thereto.

In some embodiments, the core network device may be one device including one or more network elements, and may also be a plurality of devices or a device group respectively including all or part of the above one or more network elements. The network elements may be virtual or physical. The core network for example includes at least one of an Evolved Packet Core (EPC), a 5G Core Network (5GCN), and a Next Generation Core (NGC).

It can be understood that the communication system described in the embodiments of the present disclosure is for more clearly illustrating the technical solutions of the embodiments of the present disclosure, and does not constitute a limitation on the technical solutions provided by the embodiments of the present disclosure. A person of ordinary skill in the art can know that, with evolution of a system architecture and emergence of new service scenarios, the technical solutions provided in the embodiments of the present disclosure are also applicable to similar technical problems.

The following embodiments of the present disclosure may be applied to the communication system 100 shown in FIG. 1a, or part of entities thereof, but are not limited thereto. Each entity shown in FIG. 1a is illustrative. The communication system may include all or part of the entities in FIG. 1a, and may also include other entities other than those in FIG. 1a. The quantity and form of each entity are arbitrary. A connection relationship among the entities is illustrative. The entities may be disconnected or may be connected, and the connection may be in any manner, may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, a 4th generation mobile communication system (4G), a 5th generation mobile communication system (5G), 5G new radio (NR), Future Radio Access (FRA), New-Radio Access Technology (New-RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (Bluetooth (registered trademark)), a Public Land Mobile Network (PLMN) network, a Device-to-Device (D2D) system, a Machine to Machine (M2M) system, an Internet of Things (IoT) system, Vehicle-to-Everything (V2X), a system using another communication method, and a next-generation system expanded based thereon. In addition, a plurality of systems may also be combined for application (for example, a combination of LTE or LTE-A and 5G, etc.).

In some embodiments, when a discard timer of a PDCP SDU expires, or when a PDCP status report confirms successful delivery of the PDCP SDU, a transmitting PDCP entity will discard the PDCP SDU and a corresponding PDCP packet data unit (PDU). If the corresponding PDCP PDU has been submitted to a lower layer, the lower layer is indicated to discard it.

In some embodiments, for Signalling Radio Bearers (SRB), when an upper layer requests discard of a PDCP SDU, the PDCP entity shall discard all stored PDCP SDUs and PDCP PDUs.

In some embodiments, at a transmitting side, for an SDU, if its discard timer expires and it is not successfully sent, it means that discard needs to be performed at the transmitting side; or if confirmation information from a receiving side is successfully received, packet discard also needs to be performed at the transmitting side at this time.

In some embodiments, in an Extended Reality (XR) service, distinction is made according to importance of data, for example, I-frame and P-frame modeling (an I-frame may be understood as a relatively important frame, and the terminal needs to use the I-frame for decoding, while a P-frame cannot be decoded independently). However, in the related PDCP packet discard mechanism, discard according to an importance level of a packet set is not involved. Therefore, a new working manner needs to be considered.

In some embodiments, an importance-level-based PDCP packet discard mechanism is introduced into XR. It is assumed that there are two types of packet sets of (PSI, PDU Set Importance), which are divided into a first level (corresponding to a low importance level) and a second level (corresponding to a high importance level). A shorter timing time of a discard timer (a first value, configured as 0, then immediate discard is performed) is configured for a packet of the low importance level, and a longer timing time of a discard timer (corresponding to a second value) is configured for a packet of the high importance level. In this way, a corresponding packet can be discarded as soon as possible in a congestion situation. Wherein, the importance-level-based PDCP packet discard mechanism needs to be performed when network congestion occurs. Usually, the network configures, for a data radio bearer (DRB), a PSI-based discard configuration message (for example, by setting a switch of psi-BasedDiscard through an RRC reconfiguration message to be valid), and when congestion occurs in the network, sends a congestion indication or sends a mechanism for activating PSI discard (for example, indicating, through a MAC CE, that PSI based SDU discard is activated). At this time, the terminal will run the importance-level-based PDCP packet discard mechanism, that is, a short discard timer is used for a packet of the low importance level.

In some embodiments, if a first timer (that is, a short discard timer is used for a packet of a low importance level) is running, and a network congestion release indication is received (for example, indicating, through a MAC CE, that PSI based SDU discard is deactivated), or a PSI-based discard deconfiguration message indicated by the network is received (for example, by setting a switch of psi-BasedDiscard through an RRC reconfiguration message to be invalid), then whether the timer continues running and how a packet of the first level will be processed are not clear.

FIG. 2a is an interaction schematic diagram of a communication method according to embodiments of the present disclosure. As shown in FIG. 2a, the embodiments of the present disclosure relate to a communication method, which is used for the communication system 100, and the method includes:
Step S2101: A network device sends first information to a terminal.

In some embodiments, the terminal receives the first information sent by the network device.

In some embodiments, the first information is congestion indication information.

In some embodiments, the first information is congestion release indication information.

In some embodiments, the first information is deconfiguration information of a packet dropping mechanism based on Packet Set Importance (PSI). The first information may be Radio Resource Control (RRC) information or a Media Access Control (MAC) Control Element (CE).

In some embodiments, the congestion indication information is a Packet Set Importance (PSI) discard deactivation instruction.

In some embodiments, the first information is PDCP reconfiguration information.

Step S2102: The network device sends second information to the terminal.

In some embodiments, the terminal receives the second information sent by the network device.

In some embodiments, the second information indicates the terminal to: determine that a first timer for controlling PDCP SDU discard is in a running state and first information sent by the network device is received, and perform a first operation and/or a second operation.

It should be noted that, if in step S2103, based on communication rule information, it is determined that the first timer for controlling PDCP SDU discard is in a running state and the first information sent by the network device is received, and the first operation and/or the second operation is performed, then step S2102 may be omitted.

Step S2103: The terminal performs an operation.

In some embodiments, it is determined that the first timer is in a running state and the first information sent by the network device is received, and an operation is performed.

In some embodiments, based on communication rule information, it is determined that the first timer for controlling PDCP SDU discard is in a running state and the first information sent by the network device is received, and the first operation and/or the second operation is performed.

In some embodiments, controlling PDCP SDU discard may include: discarding a PDCP SDU and PDCP data PDU related to the PDCP SDU, which is not limited herein.

In some embodiments, based on the received second information sent by the network device, it is determined that the first timer for controlling PDCP SDU discard is in a running state and the first information sent by the network device is received, and the first operation and/or the second operation is performed.

In some embodiments, the operation includes a first operation and/or a second operation.

In some embodiments, the first operation controls the first timer to continue running or controls the first timer to stop running.

In some embodiments, the second operation controls the terminal to discard the PDCP SDU associated with the first timer.

In some embodiments, a first timer and a second timer are set in a PDCP layer of the terminal.

In some embodiments, the first timer is used for controlling Packet Data Convergence Protocol (PDCP) service data unit (SDU) discard.

In some embodiments, the second timer is used for controlling Packet Data Convergence Protocol (PDCP) service data unit (SDU) discard.

In some embodiments, an importance level of the PDCP SDU associated with the first timer is lower than that of the PDCP SDU associated with the second timer.

In some embodiments, PSI of the PDCP SDU associated with the first timer is lower than PSI of the PDCP SDU associated with the second timer.

In some embodiments, a timer duration of the first timer is smaller than a timer duration of the second timer.

In some embodiments, the timer duration of the first timer and/or the timer duration of the second timer may be network configured.

In some embodiments, the timer duration each time the first timer and/or the second timer is started may be different. Exemplarily, when the first timer is started for the Nth time, the timer duration is a first duration, and when the first timer is started for the (N+1)th time, the timer duration is a second duration, and the first duration may be different from the second duration, that is, the network may configure the first duration to be different from the second duration.

In some embodiments, if the first timer expires, the PDCP SDU associated with the first timer will be discarded; and if the second timer expires, the PDCP SDU associated with the second timer will be discarded.

In some embodiments, a timer may be run for each PDCP SDU.

In some embodiments, it is determined that the first timer is in a running state and the first information sent by the network device is received, and the first timer is controlled to continue running.

In some embodiments, it is determined that the first timer is in a running state and the first information sent by the network device is received, and the PDCP SDU is discarded after the first timer expires.

In some embodiments, it is determined that the first timer is in a running state and the first information sent by the network device is received, the first timer is controlled to continue running, and the PDCP SDU is discarded after the first timer expires.

In some embodiments, it is determined that the first timer is in a running state and the first information sent by the network device is received, and the first timer is controlled to stop running.

In some embodiments, it is determined that the first timer is in a running state and the first information sent by the network device is received, and the PDCP SDU is discarded immediately.

In some embodiments, it is determined that the first timer is in a running state and the first information sent by the network device is received, the first timer is controlled to stop running, and the PDCP SDU is discarded immediately. Here, "discarded immediately" may be understood as that discarding is performed when it is determined that the first timer stops running, or may be understood as that discarding is performed when the first information is received.

In some embodiments, it is determined that the first timer is in a running state and the first information sent by the network device is received, the first timer is controlled to stop running and the second timer is controlled to run, and the PDCP SDU is discarded after the second timer expires.

In some embodiments, controlling the second timer to run may be starting the second timer.

In some embodiments, the timer duration of the first timer is different from the timer duration of the second timer, and the timer duration of the second timer may be greater than the timer duration of the first timer. For example, the timer duration of the first timer is 10 s, and the timer duration of the second timer is 13 s. Certainly, the timer duration of the timer may be determined according to implementation requirements, which is not limited herein.

In some embodiments, the first timer is controlled to stop running and the first timer is controlled to run again after the first timer stops running, and the PDCP SDU is discarded after the first timer expires.

In some embodiments, associated time before the first timer runs again is different from associated time after the first timer runs again.

In some embodiments, the timer duration before the first timer runs again and the timer duration after the first timer runs again are different or the same.

Exemplarily, the timer duration before the first timer runs again is 5 seconds, the timer duration after the first timer runs again is 10 seconds, and when the first timer stops running, 3 seconds has elapsed, then in essence the PDCP SDU is discarded 13 seconds after timing of the PDCP SDU is started.

Exemplarily, the timer duration before the first timer runs again is 5 seconds, the timer duration after the first timer runs again is 5 seconds, and when the first timer stops running, 3 seconds has elapsed, then in essence the PDCP SDU is discarded 8 seconds after timing of the PDCP SDU is started.

In some embodiments, an importance level of the PDCP SDU associated with the first timer is lower than that of the PDCP SDU associated with the second timer.

In some embodiments, the timer duration of the first timer is smaller than the timer duration of the second timer.

In some embodiments, the term "information" may be interchanged with terms such as "message", "signal", "signaling", "report", "configuration", "indication", "instruction", "command", "channel", "parameter", "field", and "data".

In some embodiments, the term "sending" may be interchanged with terms such as "transmitting", "reporting", and "transfer".

The information indication method involved in the embodiments of the present disclosure may include at least one of step S2101 to step S2103. For example, step S2101 may be implemented as an independent embodiment, step S2102 may be implemented as an independent embodiment, and step S2103 may be implemented as an independent embodiment. For example, step S2101 in combination with step S2103 may be implemented as an independent embodiment, and step S2102 in combination with step S2103 may be implemented as an independent embodiment, but is not limited thereto.

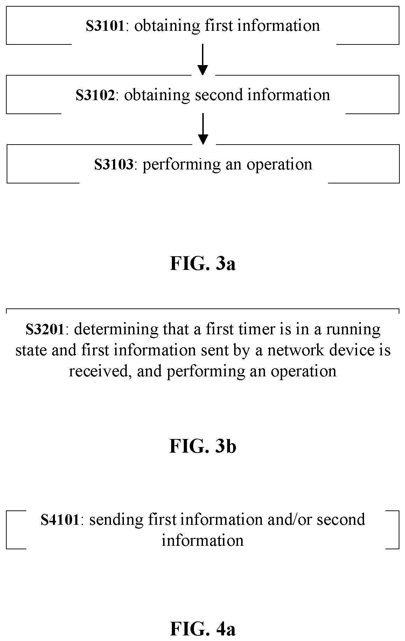

FIG. 3a is a schematic flowchart of a communication method according to embodiments of the present disclosure. As shown in FIG. 3a, embodiments of the present disclosure relate to a communication method, executed by a terminal, and the method includes:
Step S3101: obtaining first information.

In some embodiments, for optional implementations of step S3101, reference may be made to the optional implementations of step S2101 in FIG. 2a and other related parts in the embodiments involved in FIG. 2a, which are not repeated here.

Step S3102: obtaining second information.

In some embodiments, for optional implementations of step S3102, reference may be made to the optional implementations of step S2102 in FIG. 2a and other related parts in the embodiments involved in FIG. 2a, which are not repeated here.

Step S3103: performing an operation.

In some embodiments, for optional implementations of step S3103, reference may be made to the optional implementations of step S2103 in FIG. 2a and other related parts in the embodiments involved in FIG. 2a, which are not repeated here.

The information indication method involved in embodiments of the present disclosure may include at least one of steps S3101 to S3103. For example, step S3101 may be implemented as an independent embodiment, step S3102 may be implemented as an independent embodiment, and step S3103 may be implemented as an independent embodiment. For example, step S3101 in combination with step S3103 may be implemented as an independent embodiment, and step S3102 in combination with step S3103 may be implemented as an independent embodiment, but is not limited thereto.

FIG. 3b is a schematic flowchart of a communication method according to embodiments of the present disclosure. As shown in FIG. 3b, embodiments of the present disclosure relate to a communication method, executed by a terminal, and the method includes:

Step S3201: determining that a first timer is in a running state and first information sent by a network device is received, and performing an operation.

In some embodiments, the first timer is used to control discarding of a Packet Data Convergence Protocol (PDCP) service data unit (SDU); the operation includes a first operation and/or a second operation; the first operation controls the first timer to continue running or controls the first timer to stop running; and the second operation controls the terminal to discard a PDCP SDU associated with the first timer.

In some embodiments, for optional implementations of step S3201, reference may be made to the optional implementations of step S2103 in FIG. 2a and other related parts in the embodiments involved in FIG. 2a, which are not repeated here.

In some embodiments, the first information is at least one of the following:
congestion indication information;
deconfiguration information of a packet dropping mechanism based on Packet Set Importance (PSI); and
PDCP reconfiguration information.

In some embodiments, the congestion indication information is a Packet Set Importance (PSI) discard deactivation instruction.

In some embodiments, performing the operation includes at least one of the following:
controlling the first timer to continue running; and
discarding the PDCP SDU after the first timer expires.

In some embodiments, performing the operation includes at least one of the following:
controlling the first timer to stop running; and
discarding the PDCP SDU immediately.

In some embodiments, performing the operation includes one of the following:
controlling the first timer to stop running and controlling a second timer to run, and discarding the PDCP SDU after the second timer expires; and
controlling the first timer to stop running and, after the first timer stops running, controlling the first timer to restart running, and discarding the PDCP SDU after the first timer expires.

In some embodiments, the timer duration of the second timer is configured by the network.

In some embodiments, an importance level of the PDCP SDU associated with the first timer is lower than that of the PDCP SDU associated with the second timer; and/or, a timer duration of the first timer is shorter than a timer duration of the second timer.

In some embodiments, determining that the first timer for controlling discarding of a Packet Data Convergence Protocol (PDCP) service data unit (SDU) is in a running state and first information sent by a network device is received, and performing the first operation and/or the second operation, includes:
based on communication rule information or second information sent by the network device that is received, determining that the first timer for controlling discarding of the PDCP SDU is in a running state and first information sent by the network device is received, and performing the first operation and/or the second operation.

FIG. 4a is a schematic flowchart of a communication method according to embodiments of the present disclosure. As shown in FIG. 4a, embodiments of the present disclosure relate to a communication method, executed by a network device, and the method includes:
Step S4101: sending first information and/or second information.

In some embodiments, for optional implementations of step S4101, reference may be made to the optional implementations of steps S2201 and S2102 in FIG. 2a and other related parts in the embodiments involved in FIG. 2a, which are not repeated here.

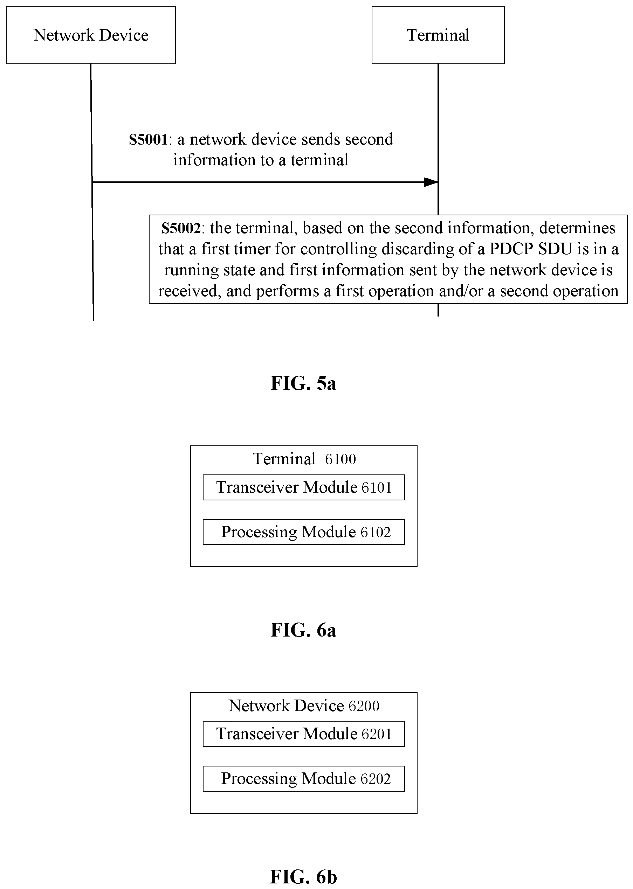

FIG. 5a is an interaction schematic diagram of a communication method according to embodiments of the present disclosure. As shown in FIG. 5a, embodiments of the present disclosure relate to a communication method, used in the communication system 100, and the method includes one of the following steps:
Step S5001: a network device sends second information to a terminal;
Step S5002: the terminal, based on the second information, determines that a first timer for controlling discarding of a PDCP SDU is in a running state and first information sent by the network device is received, and performs a first operation and/or a second operation.

For optional implementations of step S5001 and step S6502, reference may be made to the optional implementations of steps S2101 to S2103 in FIG. 2a and other related parts in the embodiments involved in FIG. 2a, which are not repeated here.

In some embodiments, the above method may include the methods in the above embodiments of the communication system side, the terminal, and the like, which are not repeated here.

In order to better understand embodiments of the present disclosure, further description is provided below through some exemplary embodiments:
In some embodiments, an SDU discard mechanism of terminal PDCP is protected.

In some embodiments, a first timer and a second timer are run respectively for packet sets of a first level (low priority level) and a second level (high priority level), wherein the first timer is associated with a timer duration of a shorter discard timer configured by the network for packet sets of the low priority level (a first value t1); wherein the second timer is associated with a timer duration of a longer discard timer configured by the network for packet sets of the high priority level (a second value t2). t1 and t2 correspond to a timer time or a timer duration.

In some embodiments, the first timer and the second timer may be different timers.

Exemplarily, when a discard timer T1 (corresponding to the first timer in the present disclosure) runs or is started, a timer time (or a timer duration) thereof is t1; when a discard timer T2 (corresponding to the second timer in the present disclosure) runs or is started, a timer time thereof is t2; that is, for a low priority level packet (which may be a packet whose low priority level is indicated by PSI) (a PDCP SDU packet), when the discard timer T1 runs or is started, a timer time thereof is t1; and for a high priority level packet, when the discard timer T2 runs or is started, a duration thereof is t2.

In some embodiments, the first timer and the second timer may be the same timer. For example, the same timer is a discard timer T, but a timer time is associated with different values according to priority levels of packet sets, that is, for different priority levels, the timer runs for different timer durations. That is, for a low priority level packet, when the discard timer T runs or is started, a duration thereof is t1; and for a high priority level packet, when the discard timer T runs or is started, a duration thereof is t2.

In some embodiments, if the first timer is running, then if congestion indication information sent by the network is received, the first timer continues running.

In some embodiments, if the first timer is running, then if a PDCP reconfiguration message indicated by the network is received, the first timer continues running.

In some embodiments, if the first timer is running, then if a deconfiguration message (or message) of a packet dropping mechanism based on PSI indicated by the network is received, the first timer continues running.

In some embodiments, solution 1 is provided. In solution 1, if the first timer is running, then if congestion release indication information sent by the network is received or a deconfiguration message of the packet dropping mechanism based on PSI indicated by the network is received, the first timer continues running;
Exemplarily, if the first timer is running, then if a congestion release indication sent by the network, that is, a Packet Set Importance (PSI) discard deactivation instruction, is received, or a deconfiguration message of the packet dropping mechanism based on PSI indicated by the network is received, the first timer continues running; at this time, the data packet (PDCP SDU) for which the first timer is running needs to wait until the first timer expires before being discarded. Thus, the currently running timer is not affected by the congestion release indication or the Packet Set Importance (PSI) discard deactivation instruction or the deconfiguration message of the packet dropping mechanism based on PSI indicated by the network, which simplifies processing.

In some embodiments, solution 2 is provided. If the first timer is running, then if congestion release indication information sent by the network is received or a deconfiguration message of the packet dropping mechanism based on PSI indicated by the network is received, the first timer stops immediately;
Exemplarily, if the first timer is running, then if congestion release indication information sent by the network, that is, a PSI discard deactivation instruction, is received, or a deconfiguration message of the packet dropping mechanism based on PSI indicated by the network is received, the first timer stops running; at this time, the data packet (PDCP SDU) for which the timer is running needs to be discarded immediately.

In some embodiments, solution 3 is provided. If the first timer is running, then if congestion release indication information sent by the network is received or a deconfiguration message of the packet dropping mechanism based on PSI indicated by the network is received, the first timer stops immediately, and a second timer is used for running;
Exemplarily, if the first timer is running, then if congestion release indication information sent by the network, that is, a PSI discard deactivation instruction, is received, or a deconfiguration message of the packet dropping mechanism based on PSI indicated by the network is received, the first timer stops running, and a second timer is used for running. The second timer may be associated with a second value configured by the network or may take into consideration a running duration that has already elapsed; at this time, the data packet (PDCP SDU) for which the first timer is running needs to wait until the second timer expires before being discarded;
For example, for a low-priority-level data packet, when the discard timer runs or is started, its duration is t1, assumed to be 5 seconds; and for a high-priority-level data packet, when the discard timer runs or is started, its duration is t2, assumed to be 10 seconds. When 3 seconds have elapsed, if congestion release indication information sent by the network, that is, a PSI discard deactivation instruction, is received, or a deconfiguration message of the packet dropping mechanism based on PSI indicated by the network is received, then for the low-priority-level data packet, if the discard timer is running, it needs to stop, and is re-assigned with the second value, that is, when restarted, it is assigned 10 seconds. Thus, when congestion is released or deconfiguration is performed, the data packet does not need to be discarded immediately, and therefore may be discarded after 10 seconds.

It should be noted that using the second timer for running may be starting a different second timer, wherein a timing value of the second timer is associated with the second value configured by the network. It should be noted that using the second timer for running may be running the same timer (that is, the original timer is first stopped and then started again), wherein a timing value of the second timer is associated with the second value configured by the network.

For example, for a low-priority-level data packet, when the discard timer runs or is started, its duration is t1, assumed to be 5 seconds; and for a high-priority-level data packet, when the discard timer runs or is started, its duration is t2, assumed to be 10 seconds. When 3 seconds have elapsed, if congestion release indication information sent by the network, that is, a PSI discard deactivation instruction, is received, or a deconfiguration message of the packet dropping mechanism based on PSI indicated by the network is received, then for the low-priority-level data packet, if the discard timer is running, it needs to stop, and is re-assigned with the second value, that is, when restarted, it is assigned 10 seconds. Thus, when congestion is released or deconfiguration is performed, the data packet does not need to be discarded immediately, and therefore may be discarded after 10 seconds.

It should be noted that using the second timer for running may be starting a different second timer, wherein a timing value of the second timer is associated with the second value configured by the network, and may also take into consideration the first duration that has already elapsed. That is, the timing value of the second timer may be jointly determined based on the second value and the first duration.

For example, for a low-priority-level data packet, when the discard timer runs or is started, its duration is t1, assumed to be 5 seconds; and for a high-priority-level data packet, when the discard timer runs or is started, its duration is t2, assumed to be 10 seconds. When 3 seconds have elapsed, if congestion release indication information sent by the network, that is, a PSI discard deactivation instruction, is received, or a deconfiguration message of the packet dropping mechanism based on PSI indicated by the network is received, then for the low-priority-level data packet, if the discard timer is running, it needs to stop, and is re-assigned with the second value, that is, when restarted, it is assigned 10 seconds, but considering that 3 seconds have already elapsed before, it may be assigned only 7 seconds. Thus, when congestion is released or deconfiguration is performed, the data packet does not need to be discarded immediately, and therefore may be discarded after another 7 seconds.

In some embodiments, it may be configured by protocol network configuration or agreed by protocol which strategy is adopted when the first timer is running and a congestion release or decongestion instruction from the network is received.

Embodiments of the present disclosure further provide an apparatus for implementing any of the above methods. For example, an apparatus is provided, and the apparatus includes units or modules for implementing the steps executed by the terminal in any of the above methods. As another example, another apparatus is provided, including units or modules for implementing the steps executed by the network device (for example, an access network device, a core network function node, a core network device, etc.) in any of the above methods.

It should be understood that division of the units or modules in the above apparatuses is merely division of logical functions. In actual implementation, all or part thereof may be integrated into one physical entity, or may be physically separated. In addition, the units or modules in the apparatus may be implemented in the form of software invoked by a processor. For example, the apparatus includes a processor, the processor is connected to a memory, instructions are stored in the memory, and the processor invokes the instructions stored in the memory to implement any of the above methods or implement functions of the above units or modules of the apparatus, wherein the processor is, for example, a general-purpose processor, such as a Central Processing Unit (CPU) or a microprocessor, and the memory is a memory inside or outside the apparatus. Alternatively, the units or modules in the apparatus may be implemented in the form of a hardware circuit, and functions of part or all of the units or modules may be implemented through design of the hardware circuit. The hardware circuit may be understood as one or more processors. For example, in one implementation, the above hardware circuit is an application-specific integrated circuit (ASIC), and functions of part or all of the units or modules are implemented through design of logical relationships of elements in the circuit; as another example, in another implementation, the above hardware circuit is a hardware circuit implemented by a programmable logic device (PLD), taking a Field Programmable Gate Array (FPGA) as an example, which may include a large number of logic gate circuits, and connection relationships among the logic gate circuits are configured through a configuration file, thereby implementing functions of part or all of the above units or modules. All units or modules of the above apparatus may all be implemented in the form of software invoked by a processor, or all be implemented in the form of a hardware circuit, or part thereof be implemented in the form of software invoked by a processor, and the remaining part thereof be implemented in the form of a hardware circuit.

In embodiments of the present disclosure, the processor is a circuit having signal processing capability. In one implementation, the processor may be a circuit having instruction reading and executing capability, such as a Central Processing Unit (CPU), a microprocessor, a graphics processing unit (GPU) (which may be understood as a microprocessor), or a digital signal processor (DSP), etc.; in another implementation, the processor may implement a certain function through logical relationships of a hardware circuit, and the logical relationships of the hardware circuit are fixed or reconfigurable. For example, the processor is a hardware circuit implemented by an application-specific integrated circuit (ASIC) or a programmable logic device (PLD), such as an FPGA. In a reconfigurable hardware circuit, a process in which the processor loads a configuration document to implement configuration of the hardware circuit may be understood as a process in which the processor loads instructions to implement functions of part or all of the above units or modules. In addition, the processor may also be a hardware circuit designed for artificial intelligence, which may be understood as an ASIC, such as a Neural Network Processing Unit (NPU), a Tensor Processing Unit (TPU), a Deep learning Processing Unit (DPU), etc.

Fig. 6a is a schematic structural diagram of the terminal proposed in the embodiments of the present disclosure. As shown in Fig. 6a, the terminal 6100 may include at least one of: a transceiver module 6101, a processing module 6102, and the like. In some embodiments, the transceiver module is configured to transmit and receive information. Optionally, the transceiver module is configured to execute at least one of communication steps such as sending and/or receiving executed by the terminal in any of the foregoing methods, which will not be repeated herein. Optionally, the processing module is configured to execute at least one of other steps executed by the first-type terminal in any of the foregoing methods, which will not be repeated herein.

In some embodiments, the processing module is further configured such that the first information is at least one of the following:
congestion indication information;
deconfiguration information of a packet dropping mechanism based on Packet Set Importance (PSI); and
PDCP reconfiguration information.

In some embodiments, the processing module is further configured such that the congestion indication information is a Packet Set Importance (PSI) discard deactivation instruction.

In some embodiments, the processing module is further configured to include at least one of the following:
controlling the first timer to continue running; and
discarding the PDCP SDU after the first timer expires.

In some embodiments, the processing module is further configured to include at least one of the following:
controlling the first timer to stop running; and
discarding the PDCP SDU immediately.

In some embodiments, the processing module is further configured to include one of the following:
controlling the first timer to stop running and controlling the second timer to run, and discarding the PDCP SDU after the second timer expires; and
controlling the first timer to stop running and, after the first timer stops running, controlling the first timer to run again, and discarding the PDCP SDU after the first timer expires.

In some embodiments, the processing module is further configured such that a timer duration of the second timer is network-configured.

In some embodiments, the processing module is further configured such that an importance level of the PDCP SDU associated with the first timer is lower than that of the PDCP SDU associated with the second timer; and/or a timer duration of the first timer is less than a timer duration of the second timer.

In some embodiments, the processing module is further configured to:
based on communication rule information or the second information sent by the network device and received, determine that the first timer for controlling PDCP SDU discard is in a running state and that the first information sent by the network device is received, and perform the first operation and/or the second operation.

Fig. 6b is a schematic structural diagram of the network device proposed in the embodiments of the present disclosure. As shown in Fig. 6b, the network device 6200 may include at least one of: a transceiver module 6201, a processing module 6202, and the like. In some embodiments, the transceiver module is configured to transmit and receive information. Optionally, the transceiver module is configured to execute at least one of communication steps such as sending and/or receiving executed by the network device in any of the foregoing methods, which will not be repeated herein. Optionally, the processing module is configured to execute at least one of other steps executed by the network device in any of the foregoing methods, which will not be repeated herein.

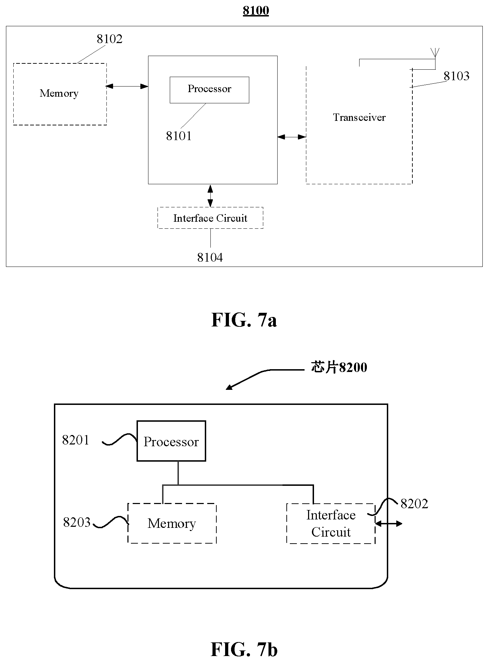

Fig. 7a is a schematic structural diagram of the communication device 8100 proposed in the embodiments of the present disclosure. The communication device 8100 may be a network device (for example, an access network device, a core network device, and the like), may be a terminal (for example, user equipment, and the like), may also be a chip, a chip system, or a processor, etc. that supports a network device in implementing any of the foregoing methods, and may also be a chip, a chip system, or a processor, etc. that supports a terminal in implementing any of the foregoing methods. The communication device 8100 may be configured to implement the methods described in the foregoing method embodiments, and reference may be made in detail to the descriptions in the foregoing method embodiments.

As shown in Fig. 7a, the communication device 8100 includes one or more processors 8101. The processor 8101 may be a general-purpose processor or a dedicated processor, for example, may be a baseband processor or a central processor. The baseband processor may be configured to process communication protocols and communication data, and the central processor may be configured to control a communication apparatus (for example, a base station, a baseband chip, a terminal device, a terminal device chip, a DU, or a CU, etc.), execute programs, and process data of the programs. The communication device 8100 is configured to execute any of the foregoing methods.

In some embodiments, the communication device 8100 further includes one or more memories 8102 configured to store instructions. Optionally, all or part of the memory 8102 may also be located outside the communication device 8100.

In some embodiments, the communication device 8100 further includes one or more transceivers 8103. When the communication device 8100 includes one or more transceivers 8103, the transceiver 8103 executes at least one of communication steps such as sending and/or receiving in the foregoing methods (for example, step S2101, step S3101, but not limited thereto), and the processor 8101 executes at least one of other steps (for example, step S2102, step S3102, but not limited thereto).

In some embodiments, the transceiver may include a receiver and/or a transmitter, and the receiver and the transmitter may be separated from each other or may be integrated together. Optionally, the terms transceiver, transceiving unit, transceiver machine, transceiver circuit, and the like may be replaced with each other, the terms transmitter, transmitting unit, transmitter machine, transmitting circuit, and the like may be replaced with each other, and the terms receiver, receiving unit, receiver machine, receiving circuit, and the like may be replaced with each other.

In some embodiments, the communication device 8100 may include one or more interface circuits 8104. Optionally, the interface circuit 8104 is connected to the memory 8102, and the interface circuit 8104 may be configured to receive a signal from the memory 8102 or another device, and may be configured to send a signal to the memory 8102 or another device. For example, the interface circuit 8104 may read an instruction stored in the memory 8102 and send the instruction to the processor 8101.

The communication device 8100 in the descriptions of the foregoing embodiments may be a network device or a terminal, but the scope of the communication device 8100 described in the present disclosure is not limited thereto, and the structure of the communication device 8100 is not limited by Fig. 7a. The communication device may be an independent device or may be a part of a larger device. For example, the communication device may be: (1) an independent integrated circuit (IC), a chip, a chip system, or a subsystem; (2) a set including one or more ICs, and optionally, the set of ICs may also include a storage component configured to store data and programs; (3) an application-specific integrated circuit (ASIC), such as a modem (Modem); (4) a module that may be embedded in another device; (5) a receiver, terminal device, smart terminal device, cellular phone, wireless device, handset, mobile unit, vehicle-mounted device, network device, cloud device, artificial intelligence device, and so on; (6) other devices, and so on.

Fig. 7b is a schematic structural diagram of the chip 8200 proposed in the embodiments of the present disclosure. For the case where the communication device 8100 may be a chip or a chip system, reference may be made to the schematic structural diagram of the chip 8200 shown in Fig. 7b, but is not limited thereto.

The chip 8200 includes one or more processors 8201, and the chip 8200 is configured to execute any of the foregoing methods.

In some embodiments, the chip 8200 further includes one or more interface circuits 8202. Optionally, the interface circuit 8202 is connected to the memory 8203, the interface circuit 8202 may be configured to receive a signal from the memory 8203 or another device, and the interface circuit 8202 may be configured to send a signal to the memory 8203 or another device. For example, the interface circuit 8202 may read an instruction stored in the memory 8203 and send the instruction to the processor 8201.

In some embodiments, the interface circuit 8202 executes at least one of communication steps such as sending and/or receiving in the foregoing methods (for example, step S2101, step S3101, but not limited thereto), and the processor 8201 executes at least one of other steps (for example, step S2102, step S3102, but not limited thereto).

In some embodiments, the terms interface circuit, interface, transceiver pin, transceiver, and the like may be replaced with each other.

In some embodiments, the chip 8200 further includes one or more memories 8203 configured to store instructions. Optionally, all or part of the memory 8203 may be located outside the chip 8200.

The present disclosure further provides a storage medium. Instructions are stored on the storage medium, and when the instructions are run on the communication device 8100, the communication device 8100 is caused to execute any of the foregoing methods. Optionally, the storage medium is an electronic storage medium. Optionally, the storage medium is a computer-readable storage medium, but is not limited thereto, and may also be a storage medium readable by another device. Optionally, the storage medium may be a non-transitory storage medium, but is not limited thereto, and may also be a transitory storage medium.

The present disclosure further provides a program product. When the program product is executed by the communication device 8100, the communication device 8100 is caused to execute any of the foregoing methods. Optionally, the program product is a computer program product.

The present disclosure further provides a computer program. When the computer program is run on a computer, the computer is caused to execute any of the foregoing methods.

## Claims

1. A communication method, wherein the method is performed by a terminal, and the method comprises:
determining that a first timer is in a running state and first information sent by a network device is received, and performing an operation;
wherein the first timer is used to control packet data convergence protocol (PDCP) service data unit (SDU) discarding; the operation comprises a first operation and/or a second operation; the first operation controls the first timer to continue running or controls the first timer to stop running; and the second operation controls the terminal to discard a PDCP SDU associated with the first timer.

2. The method according to claim 1, wherein the first information is at least one of the following:
congestion indication information;
de-configuration information of a packet discard mechanism based on packet set importance (PSI); and
reconfiguration information of PDCP.

3. The method according to claim 2, wherein the congestion indication information is a packet set importance (PSI) discard deactivation command.

4. The method according to claim 1, wherein performing the operation comprises at least one of the following:
controlling the first timer to continue running; and
discarding the PDCP SDU after the first timer expires.

5. The method according to claim 1, wherein performing the operation comprises at least one of the following:
controlling the first timer to stop running; and
immediately discarding the PDCP SDU.

6. The method according to claim 1, wherein performing the operation comprises one of the following:
controlling the first timer to stop running and controlling a second timer to run, and discarding the PDCP SDU after the second timer expires; and
controlling the first timer to stop running and, after the first timer stops running, controlling the first timer to run again, and discarding the PDCP SDU after the first timer expires.

7. The method according to claim 6, wherein a timer duration of the second timer is network-configured.

8. The method according to claim 6, wherein an importance level of the PDCP SDU associated with the first timer is lower than an importance level of the PDCP SDU associated with the second timer; and/or, a timer duration of the first timer is less than a timer duration of the second timer.

9. The method according to claim 1, wherein determining that the first timer for controlling packet data convergence protocol (PDCP) service data unit (SDU) discarding is in a running state and first information sent by a network device is received, and performing the first operation and/or the second operation, comprises:
determining, based on communication rule information or second information sent by the network device that is received, that the first timer for controlling PDCP SDU discarding is in the running state and the first information sent by the network device is received, and performing the first operation and/or the second operation.

10. A terminal, wherein the terminal comprises:
a processing module, configured to:
determine that a first timer is in a running state and first information sent by a network device is received, and perform an operation;
wherein the first timer is used to control packet data convergence protocol (PDCP) service data unit (SDU) discarding; the operation comprises a first operation and/or a second operation; the first operation controls the first timer to continue running or controls the first timer to stop running; and the second operation controls the terminal to discard a PDCP SDU associated with the first timer.

11. The terminal according to claim 10, wherein the processing module is further configured such that the first information is at least one of the following:
congestion indication information;
de-configuration information of a packet discard mechanism based on packet set importance (PSI); and
reconfiguration information of PDCP.

12. The terminal according to claim 11, wherein the processing module is further configured such that the congestion indication information is a packet set importance (PSI) discard deactivation command.

13. The terminal according to claim 10, wherein the processing module is further configured to comprise at least one of the following:
control the first timer to continue running; and
discard the PDCP SDU after the first timer expires.

14. The terminal according to claim 10, wherein the processing module is further configured to comprise at least one of the following:
control the first timer to stop running; and
immediately discard the PDCP SDU.

15. The terminal according to claim 10, wherein the processing module is further configured to comprise one of the following:
control the first timer to stop running and control a second timer to run, and discard the PDCP SDU after the second timer expires; and
control the first timer to stop running and, after the first timer stops running, control the first timer to run again, and discard the PDCP SDU after the first timer expires.

16. The terminal according to claim 15, wherein the processing module is further configured such that a timer duration of the second timer is network-configured.

17. The terminal according to claim 15, wherein the processing module is further configured such that an importance level of the PDCP SDU associated with the first timer is lower than an importance level of the PDCP SDU associated with the second timer; and/or, a timer duration of the first timer is less than a timer duration of the second timer.

18. The terminal according to claim 10, wherein the processing module is further configured to:
determine, based on communication rule information or second information sent by the network device that is received, that the first timer for controlling PDCP SDU discarding is in a running state and first information sent by the network device is received, and perform the first operation and/or the second operation.

19. A terminal, wherein the terminal comprises:
one or more processors;
wherein the terminal is configured to perform the method according to any one of claims 1 to 9.

20. A storage medium, wherein the storage medium stores instructions that, when the instructions are run on a communication device, cause the communication device to perform the method according to any one of claims 1 to 9.
